(19) Europäisches Patentamt
European Patent Office
Office européen des brevets

(11) Publication number: 0 205 976 A2

(12) # EUROPEAN PATENT APPLICATION

(21) Application number: 86107278.3

(51) Int. Cl.[4]: **B 01 D 53/34**, C 02 F 1/52

(22) Date of filing: 28.05.86

(30) Priority: 29.05.85 YU 900/85
19.09.85 YU 1482/85
07.10.85 YU 1601/85

(43) Date of publication of application: 30.12.86 Bulletin 86/52

(84) Designated Contracting States: AT BE CH DE FR GB IT LI LU NL SE

(71) Applicant: METALNA strojegradnja, konstrukcije in montaza n.sol.o. Tozd Tovarna investicijska opreme n.sol.o, Zagrebska C. 20, 62000 Maribor (YU)

(72) Inventor: Ruzic, Vojislav, Milke Kerin 9, 63000 Celje (YU)

(74) Representative: Klunker . Schmitt-Nilson . Hirsch, Winzererstrasse 106, D-8000 München 40 (DE)

(54) **A process for the removal of sulfur oxides from gaseous and/or liquid waste products.**

(57) A process for the removal of sulfur oxides from gaseous and/or liquid waste products is described, wherein gaseous and/or liquid waste products containing sulfur oxides, are treated with barium oxide, the obtained barium sulfate and sulfite are thermically dissociated with addition of elementary sulfur to sulfur oxides and barium oxide which is returned into the process. The process is particularly suitable for the purification of waste gases containing sulfur dioxide and for the neutralization of residuary sulfuric acid.

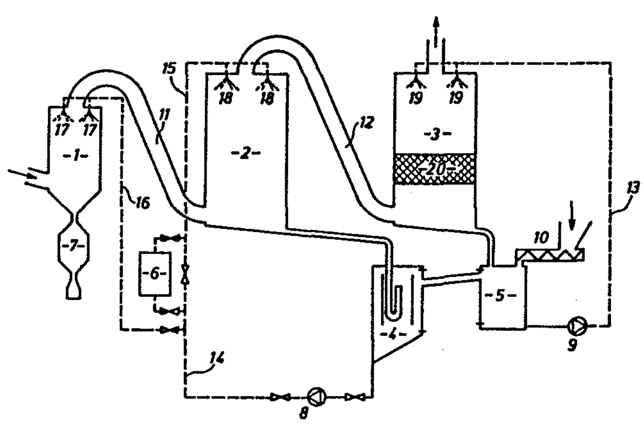




ACTORUM AG

A process for the removal of sulfur oxides from gaseous and/or liquid waste products

## Technical Field of the Invention

This invention relates to a process for the removal of sulfur oxides from gaseous and/or liquid waste products. More particularly it relates to a process for the removal of sulfur oxides which are contained in waste gases or which are dissolved in water, wherein barium oxide is used as the absorbing and/or neutralizing agent and wherein the obtained barium sulfate and the optionally present barium sulfite are thermically dissociated in order to regenerate sulfur oxides and barium oxide which is returned into the process.

## Background of the Invention

Waste gases which are formed in the production of metals in smelting plants, in various chemical processes, when burning fossil fuels in thermal power stations and in households contain in addition to other constituents also sulfur oxides.

Since on one hand sulfur oxides represent a great hazard for the environment and on the other hand sulfur represents an important raw material for the chemical industry, increasing attention is paid to the removal of sulfur oxides from waste gases.

Sulfuric acid is the most important solution of a sulfuric oxide in water. A non-negligible part of the sulfuric acid is present in the form of residuary sulfuric acid.

Residuary sulfuric acid is formed wherever it is produced or used, e.g. in chemistry, metallurgy, agricultural chemistry and the like. Free sulfuric acid represents a hazard for living organisms and for the environment. Thus it must be neutralized,

i.e. converted to a form which is harmless both for the living organisms and the environment. As sulfur and its compounds, on the other hand, represent an important raw material for the chemical industry, increasing attention is everywhere paid to the removal of sulfuric acid from waste solutions and to the regeneration thereof.

Although by the removal of sulfur oxides from waste gases and of sulfuric acid from waste solutions the air pollution as well as the pollution of the surface and underground water are reduced there are thereat several residues formed which must be dumped and which can represent a new source of pollution of both the ground and the waters.

The aim of the present invention is a complete removal of sulfur oxides and sulfuric acid from waste gases and solutions containing the same by means of an absorbing and neutralizing agent whereby a product is formed from which sulfur oxides and the absorbing and neutralizing agent can be regenerated.

It has been found that this aim can be achieved by using barium oxide as the absorbing or neutralizing agent, whereby barium sulfate and optionally sulfite are formed. By the thermic dissociation of the obtained product, sulfur oxides and barium oxide are regenerated, the latter being returned into the process.

## Prior Art

Several processes are known for the removal of sulfur oxides from gases containing the same, wherein absorbing agents are used which form solid compounds with sulfur oxides. These

processes can be roughly divided in the so-called dry processes, dry-wet processes and wet processes.

In USP 2 718 453 a dry process is described, wherein pulverized calcium carbonate is blown into the waste gas whereat calcium sulfate and calcium sulfite are formed resp. A drawback of this process represents the fact that due to the limited active surface of the solid phase the reaction between the gas phase and the solid phase proceeds rather slowly and incompletely and that products which are formed thereat are not always suitable for the regeneration of the absorbing agent or sulfur oxides necessitating in consequence large disposal areas.

For example, processes described in USP 3 438 727 and USP 3 438 728 can be numbered among dry processes. In both processes molten mixtures of salts are used as active absorbing agents for the removal of sulfur oxides from hot waste gases. The advantage of these processes is the possibility of the regeneration of used up absorbing agents and of their reuse in the absorption whereas the drawback is the necessity that waste gases must have a sufficiently high temperature in order to react with molten salts which in most older thermal power stations e.g. necessitates a reconstruction of the heating system.

Wet processes necessitate that waste gases must have low temperatures. Therefore, hot gases must be cooled down prior to the absorption. Aqueous solutions of calcium hydroxide, sodium carbonate or ammonia and suspensions of calcium carbonate respectively are used as absorbing agents. Wet processes are in use in many thermal power stations. For example, a wet process is described in USP 3 533 847 wherein an aqueous solution of sodium carbonate or sodium hydroxide is used for the absorption of sulfur oxides. Thereat, aqueous solutions of sulfates or sulfites are obtained, which must be evaporated

in order to separate the salts, which are regenerated and reused in the process. Although wet processes exhibit some advantages they suffer from the drawback that great quantities of very diluted solutions are formed. The consequence of this is that the regeneration of absorbing agents and sulfur oxides becomes unprofitable. Moreover, in course of the purification waste gases are cooled below their dew point and must be reheated prior to their release to the atmosphere.

Recently wet-dry processes have gained acceptance which show better results when compared with wet processes. Such a process is for instance described in USP 3 932 587. In a drying tower, hot waste gases containing sulfur oxides are brought in contact with an aqueous solution of absorbing agents from the group consisting of alkali carbonates or bicarbonates and their mixtures resp. In contrast to wet processes the solution of the absorbing agent only contains such a quantity of water that in the drying tower it will be almost completely evaporated yielding as the end product a practically dry powder containing between 28 and 85% by weight of a mixture of alkali sulfite and sulfate, the balance being the unreacted absorbing agent. From this product sulfur oxides and the absorbing agent are regenerated, the latter being reintroduced into the process. Since the absorption takes place within a relatively short period of time while the absorbing agent is still dissolved in water the efficiency of the absorbing agent is incomplete and even in case that part of the obtained product, containing the still unreacted absorbing agent is mixed with the fresh absorbing agent solution, the latter must be added in excess.

There are also known several processes for the removal of sulfuric acid from solutions containing the same wherein neutralizing agents are used which with sulfuric acid form compounds

which are either soluble or insoluble in the solutions.

Most frequently lime in powdery form or in form of suspension is used whereby calcium sulfate is formed. Sometimes, limestone is used instead of lime.

A drawback of this process is the limited usability as well as the unsuitability for the regeneration of the obtained calcium sulfate. Thus extensive dumping grounds are necessary for the disposal, which can be a new source of environmental pollution.

Other neutralizing agents are also used for a complete neutralization of sulfuric acid in solutions; however, the products obtained require expensive processes for the regeneration, which is economically justifiable only in infrequent cases.

While there are known several processes for the thermic dissociation of metallic sulfides and carbonates, only two processes for the thermic dissociation of sulfates are known.

One of them is the thermic decomposition of calcium sulfate, the other being the thermic decomposition of iron(II)sulfate. In both cases an endothermic reaction is involved, and due to the energy required therefor, both processes are very expensive.

For a thermic dissociation of calcium sulfate, which is, e.g. formed during the neutralization of sulfuric acid with lime or in the manufacture of phosphoric acid from naturally occuring phosphates, the obtained calcium phosphate, which contains two molecules of water of crystallization, must be dehydrated prior to the actual dissociation, which requires additional energy. Sulfur trioxide and the roasting residue formed during the dissociation are used for the manufacture of sulfuric acid and for the production of cement, respectively. However, the process is not economical.

Likewise, at the thermic decomposition of iron(II)sulfate, which is, e.g., formed as a by-product in the production of titanium dioxide or during the cementation of copper, the product must be dehydrated previously since it contains even seven molecules of water. Sulfur dioxide and sulfur trioxide formed at the dissociation are used for the production of sulfuric acid and the roasting residue is dumped in the dumping ground. Although the process is very expensive and uneconomical, it cannot be avoided since iron(II)sulfate is highly water-soluble and represents a great hazard for the environment.

Detailed Description of the Invention

A. The removal of sulfur oxides from waste gases

The absorption of sulfur oxides proceeds according to the following equations:

$BaO + H_2O \longrightarrow Ba(OH)_2;$

$Ba(OH)_2 + SO_2 \longrightarrow BaSO_3 + H_2O;$

$BaSO_3 + 1/2\ O_2 \longrightarrow BaSO_4$

$Ba(OH)_2 + SO_3 \longrightarrow BaSO_4 + H_2O$

$Ba(OH)_2 + SO_2 + 1/2\ O_2 \longrightarrow BaSO_4 + H_2O$

$2BaO + SO_2 + 1/2\ O_2 + SO_3 \longrightarrow 2BaSO_4$

In Fig.1 the arrangement for carrying out the removal of sulfur oxides from waste gases is shown.

The arrangement comprises an absorbing-drying tower 1, two absorbing towers 2,3, receptacles 4,5 and 7, a heat-exchanger 6, pumps 8,9, a dosing device 10, gas pipes 11,12, absorbing agent pipes 13,14,15 and 16, spraying nozzles 17,18,19 and respective shut-off devices, thermocouple elements, level measuring instruments and a process controlling device.

In the upper part of the absorbing-drying tower 1 and both absorbing towers 2,3 there are arranged spraying nozzles 17, 18,19 for the absorbing agent solution. A waste gas feed pipe

is connected over the bottom to the lower part of the absorbing-drying tower 1. The top of the absorbing-drying tower 1 is connected by means of a pipe 11 to the lower part of the absorption tower 2. The top of the absorption tower 2 is connected by means of the pipe 12 to the lower part of the absorption tower 3. The absorption tower 3 is filled in its lower part with packing bodies 20, which facilitate a better contact between the gas, liquid and solid phase. An exhaust pipe for the removal of the desulfurized gas through the flue is arranged on the top of the absorption tower 3.

The process will now be described with reference to the Figure 1. The waste gas containing sulfur oxides from which any solid particles were removed in a dust arrester and which in case of need was cooled down to a temperature of between 350°C and 70°C is conducted through the waste gas feed pipe into the absorbing-drying tower 1 through which it is passed upwards in countercurrent to the barium hydroxide solution, which is conveyed from the receptacle 4 by means of the pump 8 through the pipes 14,15 into the spraying nozzles 17. Depending on the temperature of the waste gas and on the concentration of sulfur oxides therein, the concentration and the quantity of barium hydroxide are automatically controlled in such a way that the quantity of the absorbing agent is adjusted to the quantity of sulfur oxides so that the quantity of the former is smaller than the stoichiometrically necessary one and that the concentration of sulfur oxides is adjusted to the inlet temperature of the gas so that all the water contained in the absorbing agent solution is evaporated. The dry reaction product is collected on the bottom of the tower 1 wherefrom it is discharged by means of the shut-off device into the receptacle 7. This receptacle is periodically emptied by means of the shut-off device and the product is conveyed to the unit for the regeneration of the sulfur oxides and barium oxide ( shown in Figure 3). Optionally barium sulfate obtained

in the neutralization of waste water containing sulfuric acid is also conveyed to this unit. The partly purified waste gas is evacuated at the top of the absorbing-drying tower 1 and passed via the pipe 11 to the absorbing tower 2, where it is introduced at the bottom and directed upwards in countercurrent to the barium hydroxide solution, which is by means of pump 8 fed via the pipes 14,15 and sprayed from the nozzles 18. If the temperature of the barium hydroxide solution is too high it is fed to the spraying nozzles 18 through a by-pass and the heat-exchanger 6, wherein it is cooled down. The solution which after the absorption of sulfur oxides contains in addition to barium sulfate (and sulfite) the unreacted barium hydroxide is passed from the bottom of the tower 2 into the receptacle 4 to which also fresh barium hydroxide solution is fed from the receptacle 5 by means of an overflow pipe. The almost completely purified waste gas is passed from the top of the absorbing tower 2 via the pipe 12 into the lower part of the absorbing tower 3. On the surface of the packing bodies 20 the absorption of the last traces of sulfur oxides takes place in the fresh, practically unused barium hydroxide solution, which is fed from the receptacle 5 by means of the pump 9 via the pipe 13 to the nozzles 19, wherefrom it is sprayed in countercurrent to the waste gas stream. The purified waste gas leaves the absorbing tower 3 on its top via an exhaust pipe for the removal of purified gas and is released into atmosphere. After the absorption of the last traces of sulfur oxides on the surface of the packing bodies 20 is completed, the barium hydroxide solution flows from the bottom of the absorption tower 3 into the receptacle 5. Fresh barium oxide coming from the unit for the regeneration of sulfur oxides and barium oxide is fed by means of the dosing device 10 into the receptacle 5. The quantity of the fresh barium oxide or hydroxide depends on the quantity of sulfur oxides to be removed from the waste gas.

The removal of sulfur oxides from waste gases is fully automated. Continuous measuring of waste gas quantity and temperature as well as of the concentration of sulfur oxides therein facilitates the optimum control of the necessary quantity and concentration of the absorbing agent as well as an optimum thermal balance.

The regeneration of the obtained barium sulfate, possibly admixed with sulfite which was not oxidized to sulfate, in the unit for the regeneration of sulfur oxides and barium oxide ensures at the same time a great economy of the process, since all barium oxide is recycled into the process, the obtained sulfur oxides representing a valuable raw material.

The removal of sulfur oxides from waste gases is illustrated in Examples 1-4.

B. The removal of sulfuric acid from waste solutions

The neutralization of sulfuric acid with barium oxide proceeds according to the following equation:

$$BaO+H_2SO_4 \longrightarrow BaSO_4+H_2O$$

At neutralization the practically insoluble barium sulfate is formed which can be separated from the liquid phase mechanically.

In the accompanying Fig.2 the arrangement for carrying out the removal of sulfuric acid according to the invention is shown.

To the lower part of the acid waste water container 21 there is laterally over the bottom connected an acid waste water outlet pipe, which is by means of an automatic valve 30 connected to a neutralization tank 22. Under a barium oxide storage bin 23 there is located a screw conveyer 24, which is connected to the neutralization tank 22. In the neutralization tank there are mounted two mixers 29.

The neutralization tank 22 is by means of a pump26 connected to a settling tank 27, which is on the other hand by means of a by-pass, a pH-meter 25 and a recording-controlling device 31 connected to the neutralizatin tank 22. By means of the recording-controlling device 31 the pH-meter 25 controls the valve 30 for the acid waste water supply from the container 21. The settling tank 27 is connected to a centrifuge 28.

The process will now be described with reference to the accompanying Fig.2.

The acid waste water containing free sulfuric acid wherefrom any foreign solids were mechanically removed, is at a temperature up to 100°C fed into the acid waste water container 21. Therefrom it is via the valve 30 directed into the neutralization tank 22. From the storage bin 23 barium oxide is by means of a screw conveyer 24 conveyed into the tank 22.

The quantity of the barium oxide supply is controlled by the velocity of the screw 24. By means of a pH-meter 25, a recording-controlling device 31 and an automatic valve 10 , the inflow of the acid waste water is controlled in such a way that the pH-value in the tank 22 is kept at about 6 at all time. The neutralized solution is by means of a pump 26 fed to the settling tank 27. On the bottom of the tank 27 the precipitated barium sulfate is collected and subsequently separated from the solution in the centrifuge 28.

The barium sulfate centifuged off is conveyed to sulfur oxide and barium oxide regeneration unit shown in Fig.3 to which, optionally, barium sulfate originating from the absorption of waste gases containing sulfur oxides is conveyed as well. The purified and neutralized waste solution is discharged into the sewer system.

The process for the removal of sulfuric acid from waste solutions containing the same is fully automatic. It is controllled by means of a continuous measurement of the quantity of the acid waste solution, of the acid concentration therein, of the quantity of the added barium oxide and of the acidity of the neutralized solution.

The process can be applied for a removal of sulfuric acid from any solution containing the same irrespectively of its concentration.

The removal of sulfuric acid from waste solutions is illustrated in Examples 5-7.

C. The thermic dissociation of barium sulfate

It has been found that barium sulfate which is obtained in the neutralization of waste waters containing sulfuric acid and in the purification of waste gases containing sulfur oxides can be regenerated in a technologically simple and economical way by the thermic dissociation of barium sulfate in fluidized bed with addition of elementary sulfur.

The reaction proceeds according to the following equation:

$$BaSO_4 + S + \frac{1}{2} O_2 \longrightarrow BaO + 2SO_2$$

The energy necessary for this endothermic reaction is supplied by the added sulfur.

The thermic dissociation of barium sulfate with addition of elementary sulfur is carried out in a furnace shown in the annexed Figure 3.

The furnace comprises a chamber 32, a feed screw 33 with a barium sulfate bunker, a pipe connection 34 for the sulfur supply, an air chamber 41 with an air supply pipe connection 43 and nozzles 35, a bed 36, a pipe connection 37 for an emergency outlet of the roasted product, a pipe connection 38 for the discharge of the roasted product from the chamber 32, a pipe connection 39 for the discharge of the roasted product from the air chamber 41, a duct 40 for conveying the material to be roasted from the air chamber 41 to the chamber 32 during the operation and a pipe connection 42 for the evacuation of sulfur dioxide from the furnace.

The invention will now be illustrated by the following in no way limiting examples.

Example 1

Dusted off waste gas containing 2% of $SO_2$ and 0.1% of $SO_3$ is fed at a rate of 1000 Nm³/hr and a temperature of 170°C via the inlet pipe into the absorbing-drying tower 1. The absorbing solution, which in addition to barium hydroxide contains also barium sulfate, is pumped from the receptacle 4 at a temperature of 80°C by means of the pump 8 via the pipes 14,16 and sprayed in countercurrent through the nozzles 17. The concentration and the quantity of barium hydroxide in the absorbing solution are chosen in such a manner that all the water is evaporated during the absorption and that dry barium sulfate and sulfite resp. are formed, which are collected in the receptacle 7. The leaving gas is fed at a temperature of 105°C via the pipe 11 into the absorbing tower 2 at its bottom. The absorbing solution is pumped from the receptacle 4 via the pipes 14,15 and sprayed in countercurrent through the nozzles 18. In order to prevent the temperature of the absorbing solution to rise above 80°C it is passed via a by-pass into the heat exchanger 6 in which it is cooled down. After completion of the absorption the absorbing solution from the bottom of the absorbing tower 2 having a temperature of 80°C is returned to the receptacle 4. The leaving gas, containing only traces of $SO_2$ and $SO_3$ and having a temperature of 80°C, is conveyed via the pipe 12 to the absorbing tower 3. Fresh absorbing solution is pumped from the receptacle 5 by means of the pump 9 via the pipe 13 and sprayed in countercurrent through the nozzles 19. The gas which is leaving at the top of the absorbing tower 3 contains no sulfur oxides and is discharged directly to the atmosphere, whereas the absorbing solution is returned to the receptacle 5, into which barium oxide is fed from a bin by means of thedosing device 10 at a rate of 50 kg/hr. The quantity of barium sulfate and barium sulfite resp., which is collected in the receptacle 7, is about 76.5 kg/hr.

Example 2

In the same manner as decribed in Example 1 a waste gas containing 0.5% of $SO_2$ and 0.003% of $SO_3$ was purified. The quantity of gas was 1200 l/hr, the inlet temperature 80°C and the outlet temperature 60°C. After the purification the gas contained no sulfur oxides; barium oxide consumption was 14.4 g/hr and 22 g of $BaSO_4$ were formed.

Example 3

Analogically to Example 2 a waste gas containing 9.8% of $SO_2$ and 0.3% of $SO_3$ was purified. The quantity of the gas, the inlet and outlet temperature were as in Example 2. 228.1 g/hr of barium oxide were used for the absorption and 440.3 g/hr of barium sulfate were obtained.

Example 4

Analogically to Example 2 a waste gas containing 0.01% of $SO_2$ and 0.001% of $SO_3$ was purified. The quantity of the gas, the inlet and outlet temperature were the same as in Example 2. 0.315 g/hr of barium oxide were used for the absorption and 0.483 g/hr of barium sulfate were obtained.

Example 5

20 per cent residual sulfuric acid wherefrom any foreign solids were mechanically removed is at a temperature of 30°C fed into the acid waste water container 21 at a rate of 10 $m^3$/hr.

From the barium oxide storage bin 23 barium oxide is by means of a screw conveyer 24 conveyed to the neutralization tank 22 at a rate of 3000 g/hr.

From the acid waste water container 21, 20 per cent residual sulfuric acid is via an automatic valve 30 fed into the neutralization tank 22. The pH-meter 25 in the by-pass pipe connecting the settling tank 27 to the neutralization tank 22 is set to pH 6. Whenever the pH-value in the neutralization tank 22 rises above 6, the recording-controlling device 31 causes opening of the automatic valve 30 in the acid waste water outlet pipe from the acid waste water container 21 so that the pH-value is again brought to 6.

Sulfuric acid is neutralized by barium oxide. The suspension of barium sulfate formed is by means of a pump 26 pumped into the settling tank 27 wherefrom it is conveyed to the centrifuge 28 in which barium sulfate is separated from the clear solution. Barium sulfate is formed at a rate of 4500 g/hr.

Example 6

The procedure described in Example 5 was repeated except that 10 per cent sulfuric acid was at a temperature of 30°C fed into the acid waste water container.

Following centrifugation, a clear solution having a pH-value of 6 and barium sulfate were obtained, the rate of barium sulfate formation and the rate of consumption of barium oxide being 2284 g/hr and 1500 g/hr, respectively.

Example 7

The procedure of Example 5 was repeated except that acid waste water containing 5 per cent sulfuric acid was neutralized. Residual acid was neutralized at a rate of 10 $m^3$/hr whereat 750 g of barium oxide were used and-barium sulfate was obtained at a rate of 1140 g/hr.

Example 8

Into the chamber 32of the furnace for roasting barium sulfate having a capacity of 20 l, there are via the screw 33 fed 1 kg/hr of barium sulfate and via the pipe connection34 fed 1 kg/hr of elementary sulfur. The air supplied to the air chamber 41 at a pressure of 196 kPa is through nozzles35 passed into the chamber 32 of the furnace. The thermic dissociation of barium sulfate and the combustion of sulfur take place in the bed36 of the fluidized bed zone at a temperature of 1250°C. 0.656 kg/hr of barium oxide are via the pipe connection 38 for the discharge of roasted products evacuated and 2.275 kg/hr of sulfur dioxide are via the pipe connection 42 evacuated from the furnace.

The regeneration of barium oxide and of sulfur oxides from barium sulfate assures a great economy of the process and solves the problem of dumping since on the one hand the totality of the regenerated barium oxide is recycled into the process and on the other hand the regenerated sulfur oxides represent a valuable raw material for the production of sulfuric acid.

WHAT IS CLAIMED IS:

1. A process for the removal of sulfur oxides from gaseous and/or liquid waste products characterized in that
a) gaseous and/or
b) liquid waste products
containing sulfur oxides are treated with barium oxide and the obtained barium sulfate and barium sulfite are
c) thermically dissociated and regenerated to sulfur oxides and barium oxide, which is returned into the process.

2. A process according to claim 1 , characterized in that in a three-stage absorbtion the gaseous waste products contain from 0.01 to 10% of $SO_2$ and $SO_3$ are introduced at a temperature of between 60°C and 350°C into the first absorption stage, wherein they are directed in countercurrent against the sprayed absorbing agent solution from the second stage, containing in addition to barium hydroxide also barium sulfate and barium sulfite, in such quantity and concentration that the main part of sulfur oxides is converted to barium sulfate and barium sulfite and that all the water is evaporated, the dry barium sulfate and barium sulfite are discharged the partly purified gases are introduced at a temperature of from 100 to 50°C into the second absorption stage, into which the absorbing agent solution from the same stage, which is if necessary cooled down and admixed with fresh barium hydroxide solution, is returned and sprayed in countercurrent, and the gases containing traces of sulfur oxides are from the second absorption stage introduced at a temperature of about 50°C into the third absorption stage, into which a substantially fresh barium hydroxide solution is sprayed in countercurrent.

3. A process according to claim 1 or 2characterized in that liquid waste products, containing a solution of sulfur trioxide in water in form of a 0.01 to 50% sulfuric acid, are neutralized with barium oxide at pH about 6 and at a temperature of about 30°C, and the precipitated barium sulfate is separated from the clear solution.

4. A process according to any of claims 1 to 3 characterized in that barium sulfate obtained in steps 1a and/or 1b and elementary sulfur in a weight ratio of 1:1 and air at a pressure of about 200 kPa are reacted in a fluidized bed at a temperature of about 1250°C to barium oxide and sulfur oxides.

1/3 0205976

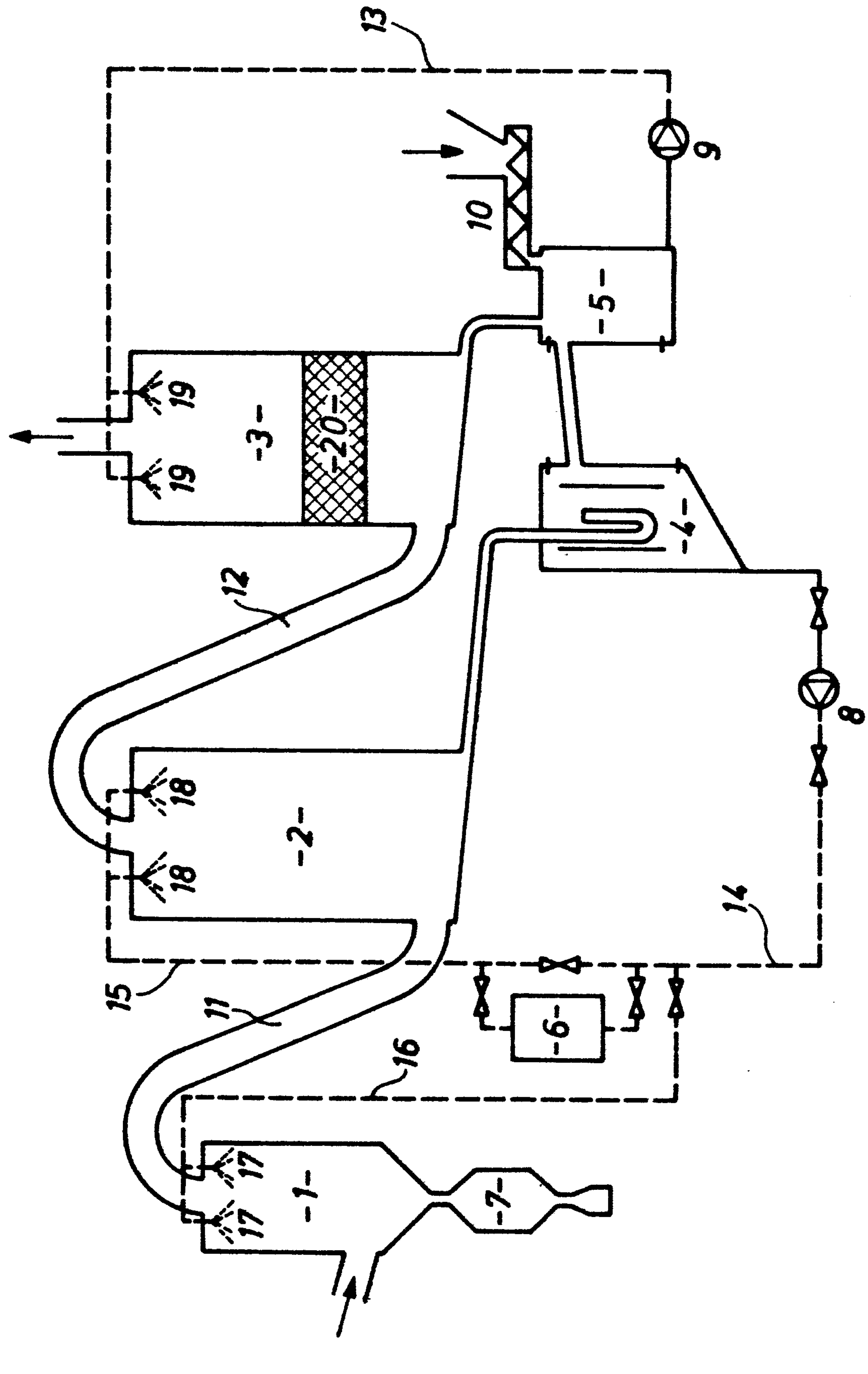


Fig.1

0205976

2/3

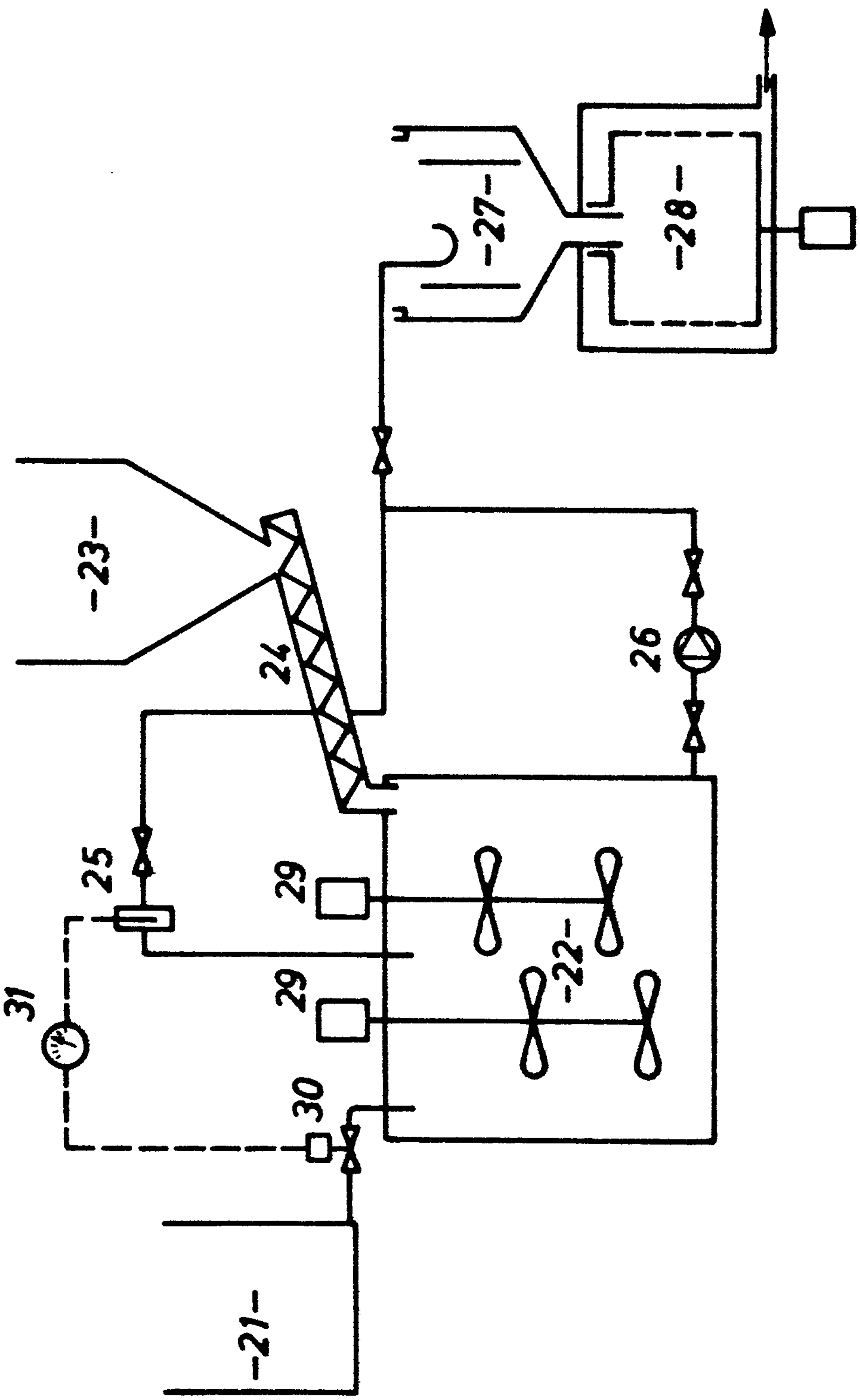


Fig. 2

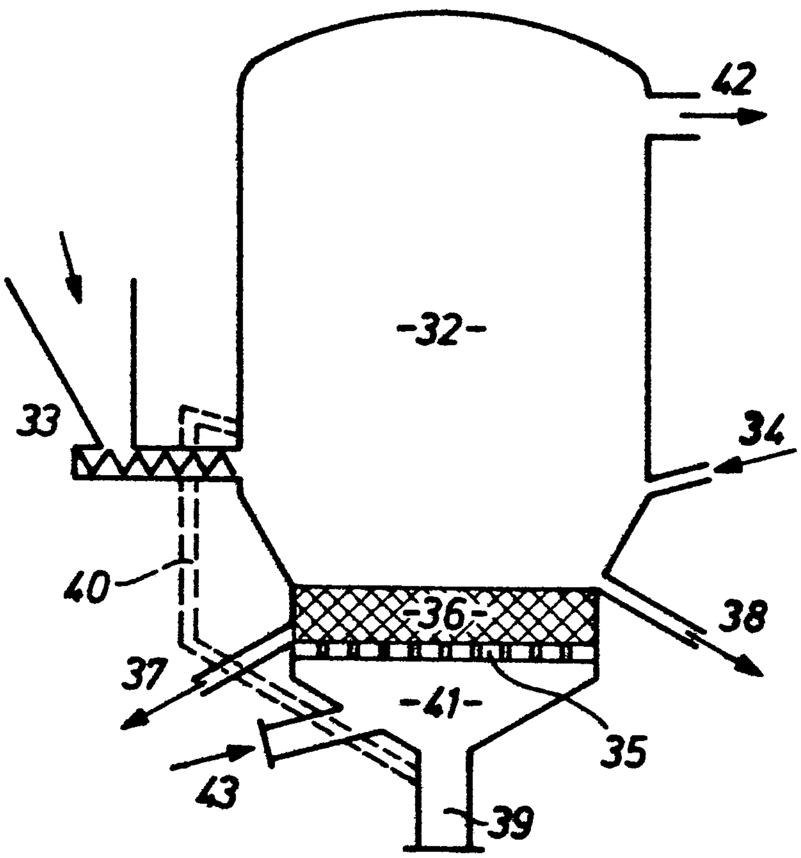


Fig. 3